# EUROPEAN PATENT APPLICATION

(11) **EP 1 308 949 A2**
(43) Date of publication of application: **07.05.2003**
(21) Application number: 02016250.9
(22) Date of filing: 22.07.2002
(51) Int. Cl.: G11B 20/00, G11B 19/12

(54) **Recording apparatus and reproducing apparatus with means for changing a date**

(30) Priority: 22.10.2001 JP 2001323251
(71) Applicant: Victor Company of Japan, Ltd., Yokohama 221-0022 (JP)
(72) Inventor: Fuchigami, Norihiko, Kamakura-shi, Kanagawa-ken (JP); Shikunami, Juichi, Miura-gun, Kanagawa-ken (JP)
(74) Representative: Manitz, Finsterwald & Partner GbR

(57) **Abstract**

A data recording apparatus includes a first device for changing a present date represented by first information, and a second device for limiting a number of times the first device changes the present date represented by the first information. The data recording apparatus may further include a third device receiving data, a fourth device for deciding whether or not the present date represented by the first information precedes a date of feed of the data which is equal to a date of the reception of the data by the third device, and a fifth device for, when the fourth device decides that the present date represented by the first information precedes the date of feed of the data, correcting the present date represented by the first information into agreement with the date of feed of the data.

## Description

### BACKGROUND OF THE INVENTION

### Field of the Invention

This invention relates to a data recording apparatus, a data reproducing apparatus, and a recording medium.

### Description of the Related Art

In a content-data distribution system, a user connects a user's personal computer with a server via the Internet, and requests the server to send desired content data. The server responds to the request, and sends the desired content data to the user's personal computer. Thus, the user's personal computer receives the desired content data. The user's personal computer stores the received content data in a recording medium such as a hard disk. Accordingly, the desired content data are down-loaded into the recording medium in the user's personal computer.

Generally, content data sent from the server contains an information piece representing the time limit for the permission of the playback of the content data. When the playback of content data in the recording medium is requested, the user's personal computer accesses the time-limit information piece of the content data and derives a playback-permission time limit therefrom. In addition, the user's personal computer derives the present date and time from its internal clock. The user's personal computer decides whether the present date and time are before the playback-permission time limit. When the present date and time are before the playback-permission time limit, the user's personal computer permits the playback of the content data. Otherwise, the user's personal computer prohibits the playback of the content data.

Usually, the present date and time represented by the clock in the user's personal computer can be intentionally altered. Thus, in the event that the present date and time represented by the clock in the user's personal computer are shifted to a time position before the playback-permission time limit from a time position after the time limit, the content data can be illegally played back.

### SUMMARY OF THE INVENTION

It is a first object of this invention to provide a data recording apparatus improved in the prevention of the illegal playback of data.

It is a second object of this invention to provide a data reproducing apparatus improved in the prevention of the illegal playback of data.

It is a third object of this invention to provide a recording medium improved in the prevention of the illegal playback of data.

A first aspect of this invention provides a data recording apparatus comprising first means for changing a present date represented by first information; and second means for limiting a number of times the first means changes the present date represented by the first information.

A second aspect of this invention is based on the first aspect thereof, and provides a data recording apparatus further comprising third means for receiving data; fourth means for deciding whether or not the present date represented by the first information precedes a date of feed of the data which is equal to a date of the reception of the data by the third means; and fifth means for, when the fourth means decides that the present date precedes the date of feed of the data, correcting the present date represented by the first information into agreement with the date of feed of the data.

A third aspect of this invention is based on the second aspect thereof, and provides a data recording apparatus further comprising sixth means for recording the data, second information, and third information on a recording medium, the second information representing the date of feed of the data, the third information representing a time limit for permission of playback of the data.

A fourth aspect of this invention provides a recording medium on which data, second information, and third information are recorded by the data recording apparatus of the third aspect of this invention.

A fifth aspect of this invention provides a data reproducing apparatus comprising first means for changing a present date represented by first information; second means for limiting a number of times the first means changes the present date represented by the first information; third means for reading out data, second information, and third information from a recording medium, the second information representing a date of feed of the data, the third information representing a time limit for permission of playback of the data; fourth means for deciding whether or not the present date represented by the first information is between the time limit which is represented by the third information and the date of feed of the data which is represented by the second information; fifth means for, when the fourth means decides that the present date is between the time limit and the date of feed of the data, permitting playback of the data; and sixth means for, when the fourth means decides that the present date is not between the time limit and the date of feed of the data, inhibiting playback of the data.

A sixth aspect of this invention is based on the fifth aspect thereof, and provides a data reproducing apparatus further comprising seventh means for deciding whether or not the present date represented by the first information precedes the date of feed of the data which is represented by the second information; and eighth means for, when the seventh means decides that the present date precedes the date of feed of the data, correcting the present date represented by the first information into agreement with the date of feed of the data which is represented by the second information.

### BRIEF DESCRIPTION OF THE DRAWINGS

Fig. 1 is a block diagram of a prior-art data recording and reproducing apparatus.
Fig. 2 is a block diagram of a data recording and reproducing apparatus according to a first embodiment of this invention.
Fig. 3 is a time-domain diagram of playback-permission terms for first, second, and third content data.
Fig. 4 is a block diagram of a data recording and reproducing apparatus according to a second embodiment of this invention.
Fig. 5 is a block diagram of a data recording and reproducing apparatus according to a third embodiment of this invention.
Fig. 6 is a time-domain diagram of playback-permission terms for first, second, third, and fourth content data.

### DETAILED DESCRIPTION OF THE INVENTION

A prior-art data recording and reproducing apparatus will be explained below for a better understanding of this invention.

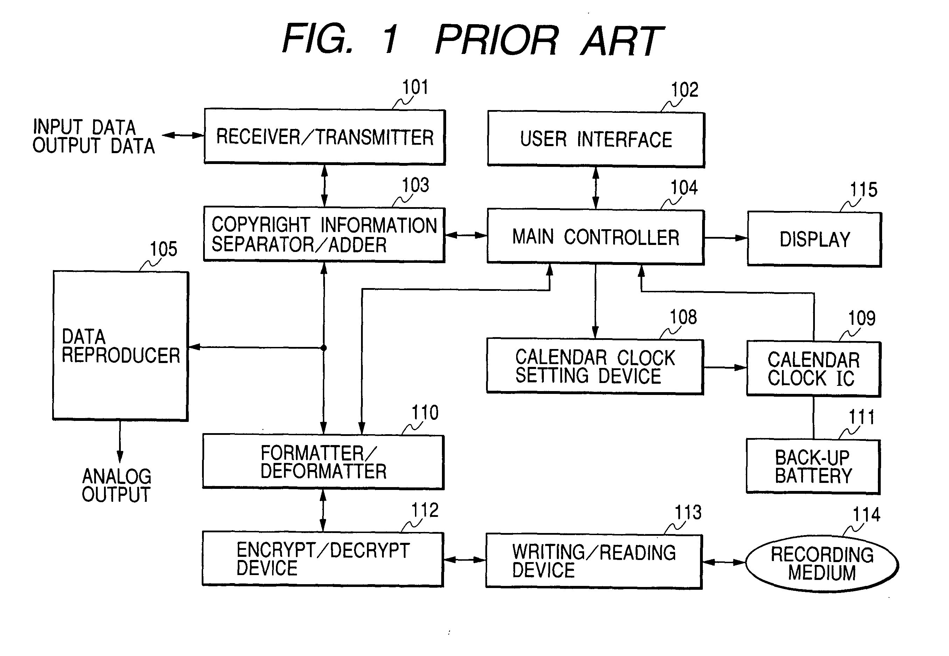

Fig. 1 shows a prior-art data recording and reproducing apparatus which can be operated in either a recording mode or a reproducing mode. The prior-art apparatus of Fig. 1 includes a user interface 102 and a main controller 104. The main controller 104 includes a main memory.

When a user's command to operate the apparatus in the recording mode is inputted into the main controller 104 via the user interface 102, the main controller 104 starts the apparatus operating in the recording mode.

During the recording mode of operation of the prior-art apparatus in Fig. 1, a data receiver/transmitter 101 receives content data from an exterior via the Internet or a digital interface. The data receiver/transmitter 101 passes the received content data to a copyright information separator/adder 103. The copyright information separator/adder 103 separates, from the received content data, copyright information (information about the copyright on the content data). The copyright information separator/adder 103 feeds the separated copyright information to the main controller 104. The copyright information separator/adder 103 passes the received content data to a formatter/deformatter 110.

The copyright information separator/adder 103 may remove the copyright information from the received content data. In this case, the copyright information separator/adder 103 passes the received content data except the copyright information to the formatter/deformatter 110.

The main controller 104 extracts, from the copyright information, an information piece representing the time limit for the permission of the playback of the content data. The main controller 104 feeds the extracted playback-time-limit information piece to the formatter/deformatter 110.

The formatter/deformatter 110 arranges the content data and the playback-time-limit information piece into a prescribed format suited for record on a recording medium 114. In other words, the formatter/deformatter 110 formats the content data and the playback-time-limit information piece. The formatter/deformatter 110 feeds the formatting-resultant data to an encrypting/decrypting device 112. The encrypting/decrypting device 112 encrypts the formatting-resultant data according to a prescribed copyright protection scheme. The encrypting/decrypting device 112 feeds the encryption-resultant data to a writing/reading device 113. The writing/reading device 113 writes the encryption-resultant data into the recording medium 114. In other words, the writing/reading device 113 records the encryption-resultant data on the recording medium 114.

When a user's command to operate the apparatus in the reproducing mode is inputted into the main controller 104 via the user interface 102, the main controller 104 starts the apparatus operating in the reproducing mode.

During the reproducing mode of operation of the prior-art apparatus in Fig. 1, the writing/reading device 113 reads out data (encryption-resultant data) from the recording medium 114. The writing/reading device 113 feeds the read-out data to the encrypting/decrypting device 112. The encrypting/decrypting device 112 decrypts the read-out data according to the prescribed copyright protection scheme. The encrypting/decrypting device 112 feeds the decryption-resultant data to the formatter/deformatter 110. The formatter/deformatter 110 deformats the decryption-resultant data into content data and a playback-time-limit information piece. The formatter/deformatter 110 feeds the playback-time-limit information piece to the main controller 104.

A calendar clock IC 109 backed up by a battery 111 generates a signal representing the present date and time. The calendar clock IC 109 outputs the signal of the present date and time to the main controller 104.

The main controller 104 derives the time limit for the permission of the playback of the content data from the playback-time-limit information piece. The main controller 104 derives the present date and time from the output signal of the calendar clock IC 109. The main controller 104 compares the present date and time with the playback-permission time limit, and decides whether or not the present date and time are before the playback-permission time limit. When it is decided that the present date and time are before the playback-permission time limit, the main controller 104 permits the playback of the content data. Otherwise, the main controller 104 prohibits the playback of the content data.

When the main controller 104 permits the playback of the content data, the formatter/deformatter 110 feeds the content data to a data reproducer 105. The data reproducer 105 converts the content data into a corresponding analog content signal. The data reproducer 105 outputs the analog content signal.

When the main controller 104 permits the playback of the content data, the formatter/deformatter 110 may feed the content data to the copyright information separator/adder 103. In this case, the main controller 104 feeds the playback-time-limit information piece to the copyright information separator/adder 103. The copyright information separator/adder 103 combines the content data and the playback-time-limit information piece into composite content data. The copyright information separator/adder 103 feeds the composite content data to the data receiver/transmitter 101. The data receiver/transmitter 101 sends the composite content data to an exterior via the Internet or the digital interface.

When the main controller 104 prohibits the playback of the content data, a display 115 indicates a message that the playback of the content data is prohibited. Then, the main controller 104 compulsorily terminates the reproducing mode of operation of the apparatus.

In the prior-art apparatus of Fig. 1, a calendar clock setting device 108 is provided between the main controller 104 and the calendar clock IC 109. The user can access the calendar clock IC 109 via the user interface 102, the main controller 104, and the calendar clock setting device 108. Through the access to the calendar clock IC 109, the user can alter the present date and time represented by the output signal of the calendar clock IC 109. In the event that the present date and time represented by the output signal of the calendar clock IC 109 are shifted to a time position before the playback-permission time limit from a time position after the time limit during the reproducing mode of operation, the content data can be illegally played back.

### First Embodiment

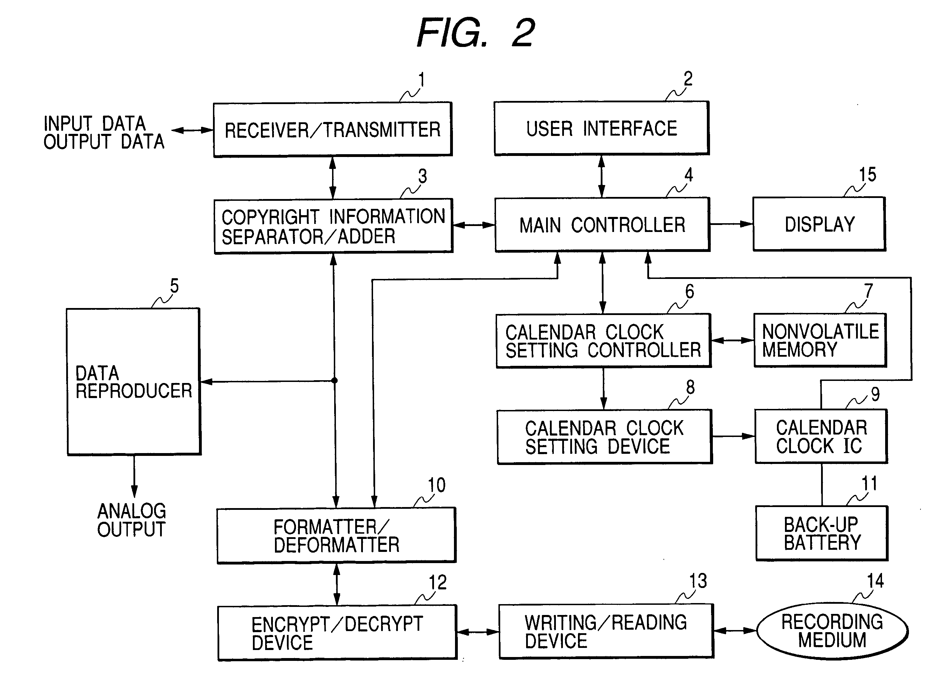

Fig. 2 shows a data recording and reproducing apparatus according to a first embodiment of this invention. The apparatus of Fig. 2 can be operated in either a recording mode or a reproducing mode. The apparatus of Fig. 2 includes a user interface 2 and a main controller 4. The user interface 2 can be accessed by a user.

The main controller 4 includes a CPU, a microcomputer, or a similar device having a combination of an input/output port, a processing section, a ROM, and a RAM. The main controller 4 operates in accordance with a control program stored in the ROM or the RAM. The control program is designed to enable the main controller 4 to implement operation steps indicated later. The main controller 4 includes a main memory which may be formed by the RAM.

When a user's command to operate the apparatus in the recording mode is inputted into the main controller 4 via the user interface 2, the main controller 4 starts the apparatus operating in the recording mode.

During the recording mode of operation of the apparatus in Fig. 2, a data receiver/transmitter 1 receives content data from an exterior via the Internet or a digital interface while being controlled by the main controller 4. The data receiver/transmitter 1 passes the received content data to a copyright information separator/adder 3. The copyright information separator/adder 3 separates, from the received content data, copyright information (information about the copyright on the content data) while being controlled by the main controller 4. The copyright information separator/adder 3 feeds the separated copyright information to the main controller 4. The copyright information separator/adder 3 passes the received content data to a formatter/deformatter 10.

The copyright information separator/adder 3 may remove the copyright information from the received content data. In this case, the copyright information separator/adder 3 passes the received content data except the copyright information to the formatter/deformatter 10.

The main controller 4 extracts, from the copyright information, an information piece representing the time limit for the permission of the playback of the content data. The main controller 4 feeds the extracted playback-time-limit information piece to the formatter/deformatter 10.

The main controller 4 accesses the received content data in the copyright information separator/adder 3. In general, the received content data include time-related information which usually represents the present date and time, that is, the transmission date and time or the broadcast date and time of the content data. The main controller 4 refers to the time-related information in the received content data, and decides the date and time of the feed (reception) of the content data on the basis of the time-related information. Specifically, the date and time of the feed of the content data mean the date and time of the reception of the content data by the apparatus (the data receiver/transmitter 1). The main controller 4 generates an information piece representing the decided content-feed date and time. The main controller 4 outputs the content-feed date and time information piece to the formatter/deformatter 10.

A calendar clock IC 9 backed up by a battery 11 generates a signal representing the present date and time. The back-up battery 11 includes a primary battery, a secondary battery, or a capacitor. The calendar clock IC 9 outputs the signal of the present date and time to the main controller 4.

In general, upon the reception of the content data by the data receiver/transmitter 1, the main controller 4 decide the date and time of the feed (reception) of the content data on the basis of the date and time notified by an external device. Alternatively, the main controller 4 may decide the date and time of the feed (reception) of the content data on the basis of the output signal of the calendar clock IC 9.

The formatter/deformatter 10 is controlled by the main controller 4, arranging the content data, the playback-time-limit information piece, and the content-feed date and time information piece into a prescribed format suited for record on a recording medium 14. In other words, the formatter/deformatter 10 formats the content data, the playback-time-limit information piece, and the content-feed date and time information piece. The formatter/deformatter 10 feeds the formatting-resultant data to an encrypting/decrypting device 12. The encrypting/decrypting device 12 is controlled by the main controller 4, encrypting the formatting-resultant data according to a prescribed copyright protection scheme. The encrypting/decrypting device 12 feeds the encryption-resultant data to a writing/reading device 13. The writing/reading device 13 writes the encryption-resultant data into the recording medium 14 while being controlled by the main controller 4. In other words, the writing/reading device 13 records the encryption-resultant data on the recording medium 14. The recording medium 14 includes, for example, a hard disk, an optical disk, a magneto-optical disk, or a magnetic tape.

The encrypting/decrypting device 12 may be omitted from the apparatus of Fig. 2. In this case, the formatting-resultant data generated by the formatter/deformatter 10 are recorded on the recording medium 14.

A calendar clock setting controller 6 is connected with the main controller 4. A nonvolatile memory 7 is connected with the calendar clock setting controller 6. A calendar clock setting device 8 is provided between the calendar clock setting controller 6 and the calendar clock IC 9. The calendar clock setting controller 6 includes a CPU, a microcomputer, or a similar device having a combination of an input/output port, a processing section, a ROM, and a RAM. The calendar clock setting controller 6 operates in accordance with a control program stored in the ROM or the RAM. The control program is designed to enable the calendar clock setting controller 6 to implement operation steps indicated later.

It should be noted that the main controller 4 and the calendar clock setting controller 6 may use a common CPU.

The user can access the calendar clock IC 9 via the user interface 2, the main controller 4, the calendar clock setting controller 6, and the calendar clock setting device 8. Through the access to the calendar clock IC 9, the user can alter, set, or reset the present date and time represented by the output signal of the calendar clock IC 9.

The calendar clock setting controller 6 handles a value "K" starting from "0". The calendar clock setting controller 6 stores a signal representative of the value "K" in the nonvolatile memory 7. Each time the present date and time represented by the output signal of the calendar clock IC 9 is altered, set, or reset, the calendar clock setting controller 6 reads out the signal of the value "K" from the nonvolatile memory 7 and increments the value "K" by "1" according to a program statement as "K=K+1". Then, the calendar clock setting controller 6 replaces the signal of the old value "K" in the nonvolatile memory 7 by a signal of the new value "K". As understood from the above description, the value "K" indicates the number of times the present date and time represented by the output signal of the calendar clock IC 9 have been altered, set, or reset.

It should be noted that the nonvolatile memory 7 may be used to store a copyright information piece for limiting the number of times of the playback of content data, and a copyright information piece for limiting the total time length of the playback of content data.

When the calendar clock IC 9 is accessed, the calendar clock setting controller 6 reads out the signal of the value "K" from the nonvolatile memory 7. The calendar clock setting controller 6 decides whether the value "K" exceeds a predetermined upper limit Kmax. When it is decided that the value "K" exceeds the upper limit Kmax, the calendar clock setting controller 6 inhibits the alteration, the setting, and the resetting of the present date and time represented by the output signal of the calendar clock IC 9. Otherwise, the calendar clock setting controller 6 permits the alteration, the setting, or the resetting of the present date and time represented by the output signal of the calendar clock IC 9.

The calendar clock setting controller 6 may encrypt the signal of the value "K". In this case, the calendar clock setting controller 6 stores the encryption-resultant signal of the value "K" in the nonvolatile memory 7.

Under the condition that the life of the back-up battery 11 is long and the apparatus is shipped after the present date and time represented by the output signal of the calendar clock IC 9 is properly set, the upper limit Kmax is preferably equal to a relatively small number (for example, "5"). Under the condition that the life of the back-up battery 11 is short, the upper limit Kmax is preferably equal to a relatively large number (for example, "20").

The correction of a small error such as a minute-order error or a second-order error in the present date and time represented by the output signal of the calendar clock IC 9 may be excluded from the factors for incrementing the value "K".

When a user's command to operate the apparatus in the reproducing mode is inputted into the main controller 4 via the user interface 2, the main controller 4 starts the apparatus operating in the reproducing mode.

During the reproducing mode of operation of the apparatus in Fig. 2, the writing/reading device 13 reads out data (encryption-resultant data) from the recording medium 14 while being controlled by the main controller 4. The writing/reading device 13 feeds the read-out data to the encrypting/decrypting device 12. The encrypting/decrypting device 12 is controlled by the main controller 4, decrypting the read-out data according to the prescribed copyright protection scheme. The encrypting/decrypting device 12 feeds the decryption-resultant data to the formatter/deformatter 10. The formatter/deformatter 10 deformats the decryption-resultant data into content data, a playback-time-limit information piece, and a content-feed date and time information piece while being controlled by the main controller 4. The formatter/deformatter 10 feeds the playback-time-limit information piece and the content-feed date and time information piece to the main controller 4.

The main controller 4 derives the time limit for the permission of the playback of the content data from the playback-time-limit information piece. The main controller 4 derives the date and time of the feed (reception) of the content data from the content-feed date and time information piece. The main controller 4 defines the term between the derived date and time of the feed and the derived time limit as a playback-permission term. The main controller 4 derives the present date and time from the output signal of the calendar clock IC 9. The main controller 4 decides whether or not the derived present date and time are in the playback-permission term. In other words, the main controller 4 decides whether or not the derived present date and time are between the feed date and time and the playback time limit. This decision may include a step of comparing the present date and time with the time limit for the permission of the playback of the content data, and a step of comparing the present date and time with the date and time of the feed of the content data. When it is decided that the present date and time are in the playback-permission term, the main controller 4 permits the playback of the content data. Otherwise, the main controller 4 prohibits the playback of the content data.

When the playback of the content data is permitted, the main controller 4 controls the formatter/deformatter 10 to feed the content data to a data reproducer 5. The data reproducer 5 converts the content data into a corresponding analog content signal. The data reproducer 5 outputs the analog content signal to an external device.

When the playback of the content data is permitted, the main controller 4 may control the formatter/deformatter 10 to feed the content data to the copyright information separator/adder 3. In this case, the main controller 4 feeds the playback-time-limit information piece and the content-feed date and time information piece to the copyright information separator/adder 3. The copyright information separator/adder 3 combines the content data, the playback-time-limit information piece, and the content-feed date and time information piece into composite content data while being controlled by the man controller 4. The copyright information separator/adder 3 feeds the composite content data to the data receiver/transmitter 1. The data receiver/transmitter 1 is controlled by the main controller 4, sending the composite content data to an exterior via the Internet or the digital interface.

When the playback of the content data is prohibited, the main controller 4 inhibits the formatter/deformatter 10 from outputting the content data. Thus, the playback of the content data is actually inhibited. In addition, the main controller 4 controls a display 15 to indicate a message that the playback of the content data is prohibited. Then, the main controller 4 compulsorily terminates the reproducing mode of operation of the apparatus.

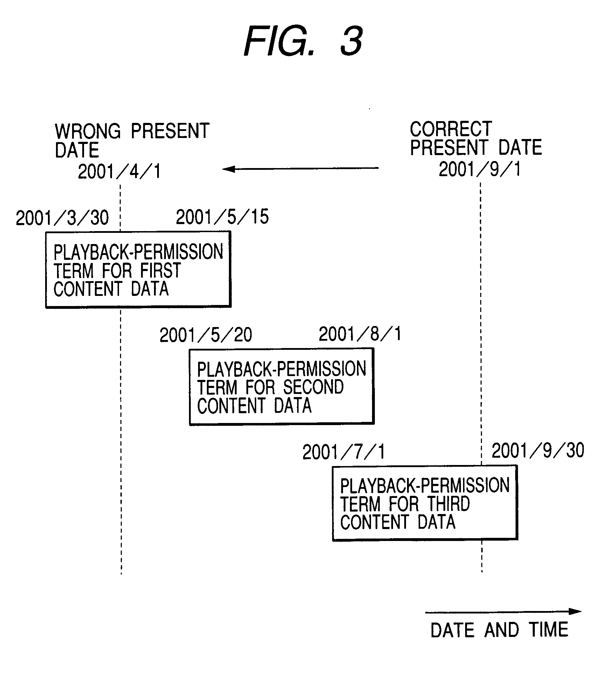

With reference to Fig. 3, it is assumed that the recording medium 14 stores first, second, and third content data. Regarding the first content data, the date and time of the feed (reception) of the content data are "2001/3/30", and the time limit for the permission of the playback of the content data is "2001/5/15". Therefore, the playback-permission term for the first content data is between "2001/3/30" and "2001/5/15". Regarding the second content data, the date and time of the feed of the content data are "2001/5/20", and the time limit for the permission of the playback of the content data is "2001/8/1". Therefore, the playback-permission term for the second content data is between "2001/5/20" and "2001/8/1". Regarding the third content data, the date and time of the feed of the content data are "2001/7/1", and the time limit for the permission of the playback of the content data is "2001/9/30". Therefore, the playback-permission term for the second content data is between "2001/7/1" and "2001/9/30".

Date and time of "2001/9/1" are in only the playback-permission term for the third content data. Thus, at date and time of "2001/9/1", only the third content data are permitted to be played back. It is assumed that the present date and time represented by the output signal of the calendar clock IC 9 are intentionally shifted from "2001/9/1" to "2001/4/1". Date and time of "2001/4/1" are in only the playback-permission term for the first content data. Thus, in this case, only the first content data are permitted to be played back while the playback of the second content data and the third content data is inhibited.

As previously mentioned, when the calendar clock IC 9 is accessed, the calendar clock setting controller 6 decides whether the value "K" exceeds the upper limit Kmax. When the "K" exceeds the upper limit Kmax, the calendar clock setting controller 6 inhibits the alteration, the setting, and the resetting of the present date and time represented by the output signal of the calendar clock IC 9. Thus, in this case, it is difficult to intentionally shift the present date and time represented by the output signal of the calendar clock IC 9 from "2001/9/1" to "2001/4/1".

### Second Embodiment

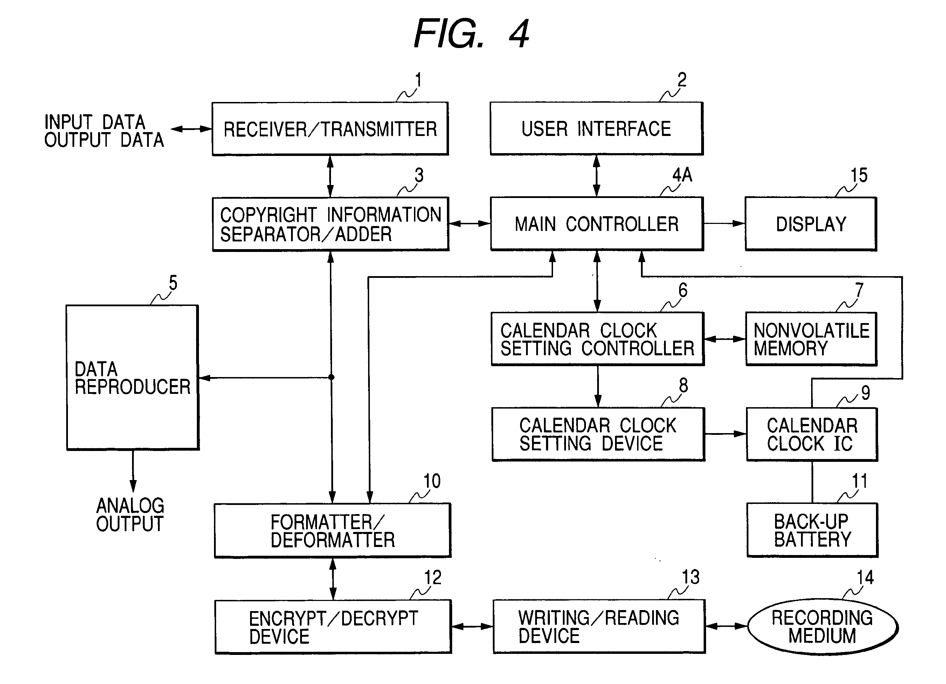

Fig. 4 shows a data recording and reproducing apparatus according to a second embodiment of this invention. The apparatus of Fig. 4 is similar to the apparatus of Fig. 2 except for design changes mentioned later. The apparatus of Fig. 4 includes a main controller 4A instead of the main controller 4 (see Fig. 2).

During the recording mode of operation of the apparatus in Fig. 4, the data receiver/transmitter 1 receives content data via the Internet. Thus, the reception of the content data is on a real-time basis. The data receiver/transmitter 1 passes the received content data to the copyright information separator/adder 3. The main controller 4A accesses the received content data in the copyright information separator/adder 3. The main controller 4A decides the date and time of the feed (reception) of the content data on the basis of time-related information in the content data as the main controller 4 does. The main controller 4A refers to the present date and time represented by the output signal of the calendar clock IC 9. The main controller 4A compares the decided date and time of the feed of the content data with the present date and time represented by the output signal of the calendar clock IC 9. Specifically, the main controller 4A determines whether the present date and time represented by the output signal of the calendar clock IC 9 differ from the date and time of the feed of the content data. When it is determined that the present date and time represented by the output signal of the calendar clock IC 9 differ from the date and time of the feed of the content data, the main controller 4A accesses and controls the calendar clock IC 9 via the calendar clock setting controller 6 and the calender clock setting device 8 so that the present date and time represented by the output signal of the calendar clock IC 9 will be compulsorily set into agreement with the date and time of the feed of the content data. On the other hand, when it is determined that the present date and time represented by the output signal of the calendar clock IC 9 do not differ from the date and time of the feed of the content data, the main controller 4A does not access the calendar clock IC 9.

Preferably, the above-indicated compulsorily setting of the present date and time represented by the output signal of the calendar clock IC 9 is excluded from the factors for incrementing the value "K". Alternatively, the compulsorily setting of the present date and time may be considered in incrementing the value "K".

### Third Embodiment

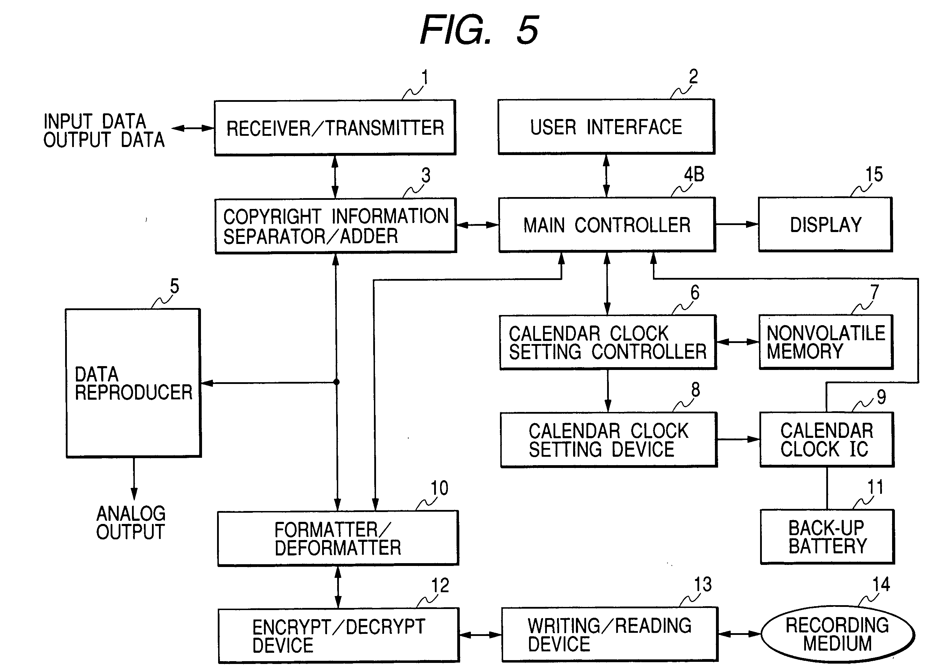

Fig. 5 shows a data recording and reproducing apparatus according to a third embodiment of this invention. The apparatus of Fig. 5 is similar to the apparatus of Fig. 2 except for design changes mentioned later. The apparatus of Fig. 5 includes a main controller 4B instead of the main controller 4 (see Fig. 2).

During the recording mode of operation of the apparatus in Fig. 4, the data receiver/transmitter 1 receives content data from an external apparatus via a digital interface according to a digital "move" procedure. Time-related information in the received content data represents the date and time of the reception of the content data by the external apparatus. The data receiver/transmitter 1 passes the received content data to the copyright information separator/adder 3. The main controller 4B accesses the received content data in the copyright information separator/adder 3. The main controller 4B decides the date and time of the feed (reception) of the content data on the basis of the time-related information in the content data as the main controller 4 does. The main controller 4B refers to the present date and time represented by the output signal of the calendar clock IC 9. The main controller 4B compares the decided date and time of the feed of the content data with the present date and time represented by the output signal of the calendar clock IC 9. Specifically, the main controller 4B determines whether the present date and time represented by the output signal of the calendar clock IC 9 precede the date and time of the feed of the content data.

Since the time-related information in the received content data represents the date and time of the reception of the content data by the external apparatus, it is normal that the present date and time represented by the output signal of the calendar clock IC 9 follow or substantially agree with the date and time of the feed of the content data. On the other hand, the present date and time represented by the output signal of the calendar clock IC 9 are wrong when preceding the date and time of the feed of the content data.

When it is determined that the present date and time represented by the output signal of the calendar clock IC 9 precede the date and time of the feed of the content data, the main controller 4B accesses and controls the calendar clock IC 9 via the calendar clock setting controller 6 and the calender clock setting device 8 so that the present date and time represented by the output signal of the calendar clock IC 9 will be compulsorily set into agreement with the date and time of the feed of the content data. On the other hand, when it is determined that the present date and time represented by the output signal of the calendar clock IC 9 do not precede the date and time of the feed of the content data, the main controller 4B does not access the calendar clock IC 9.

Preferably, the above-indicated compulsorily setting of the present date and time represented by the output signal of the calendar clock IC 9 is excluded from the factors for incrementing the value "K". Alternatively, the compulsorily setting of the present date and time may be considered in incrementing the value "K".

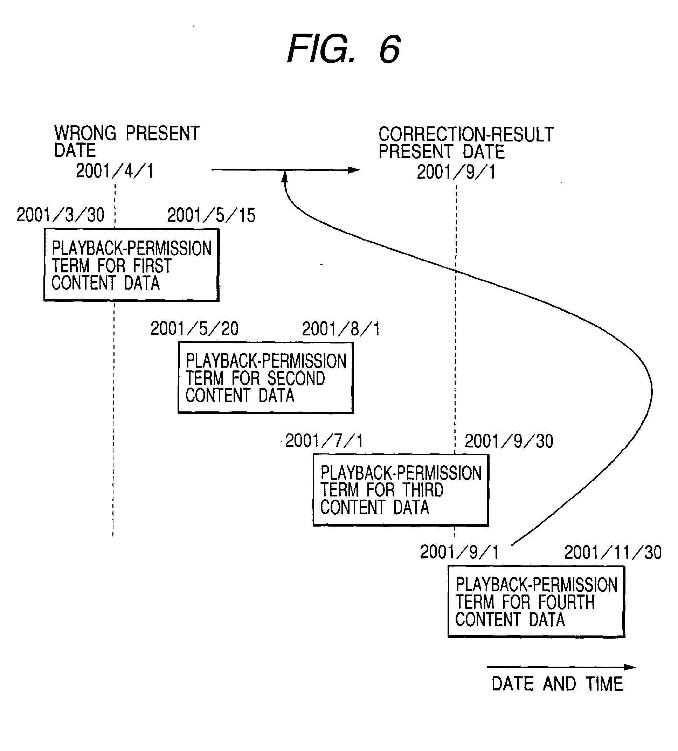

With reference to Fig. 6, it is assumed that fourth content data are received by the apparatus of Fig. 5. Regarding the fourth content data, the date and time of the feed (reception) of the content data are "2001/9/1", and the time limit for the permission of the playback of the content data is "2001/11/30". It is assumed that the present date and time represented by the output signal of the calendar clock IC 9 are "2001/4/1". In this case, since the present date and time represented by the output signal of the calendar clock IC 9 precede the date and time of the feed of the content data, the present date and time represented by the output signal of the calendar clock IC 9 are compulsorily shifted or corrected from "2001/4/1" to "2001/9/1" (the date and time of the feed of the content data).

During the reproducing mode of operation of the apparatus in Fig. 5, the main controller 4B receives the content-feed date and time information piece from the formatter/deformatter 10. The main controller 4B derives the date and time of the feed (reception) of the content data from the content-feed date and time information piece. The main controller 4B refers to the present date and time represented by the output signal of the calendar clock IC 9. The main controller 4B compares the derived date and time of the feed of the content data with the present date and time represented by the output signal of the calendar clock IC 9. Specifically, the main controller 4B determines whether the present date and time represented by the output signal of the calendar clock IC 9 precede the date and time of the feed of the content data.

It is normal that the present date and time represented by the output signal of the calendar clock IC 9 follow or substantially agree with the date and time of the feed of the content data. On the other hand, the present date and time represented by the output signal of the calendar clock IC 9 are wrong when preceding the date and time of the feed of the content data.

When it is determined that the present date and time represented by the output signal of the calendar clock IC 9 precede the date and time of the feed of the content data, the main controller 4B accesses and controls the calendar clock IC 9 via the calendar clock setting controller 6 and the calender clock setting device 8 so that the present date and time represented by the output signal of the calendar clock IC 9 will be compulsorily set into agreement with the date and time of the feed of the content data. On the other hand, when it is determined that the present date and time represented by the output signal of the calendar clock IC 9 do not precede the date and time of the feed of the content data, the main controller 4B does not access the calendar clock IC 9.

Preferably, the above-indicated compulsorily setting of the present date and time represented by the output signal of the calendar clock IC 9 is excluded from the factors for incrementing the value "K". Alternatively, the compulsorily setting of the present date and time may be considered in incrementing the value "K".

### Fourth Embodiment

A fourth embodiment of this invention is similar to one of the first, second, and third embodiments thereof except for the following design changes. According to the fourth embodiment of this invention, the date and time of the feed (reception) of content data and also the time limit for the permission of the playback of the content data are originally expressed in the standard time of a feeding side or a transmission side. During the recording mode of operation, the date and time of the feed of the content data and also the time limit for the permission of the playback of the content data are converted to expression in the standard time of a reception side in the case where the difference in time between the transmission side and the reception side causes a problem due to the long-distance transmission or the international transmission of the content data via the Internet or another communication network.

### Advantages Provided by Embodiments

The first, second, third, and fourth embodiments of this invention provide advantages as follows.
(1) An information piece representing the time limit for the permission of the playback of each of plural-contents data, and also an information piece representing the date and time of the feed of each of the plural-contents data are recorded on a recording medium. The playback-permission term for each of the plural-contents data is between the content-feed date and time and the playback-permission time limit. Under the condition that the date and time given by the calendar clock in the apparatus are within the playback-permission terms for the plural-contents data, the playback of the plural-contents data from the recording medium is permitted. Accordingly, even in the case where the date and time given by the calendar clock are illegally put back, only a small limited number of ones of the plural-contents data can be played back while most of the plural-contents data can not be played back (see Fig. 3).
(2) In the apparatus, the number of times of the setting or the alteration of the date and time given by the calendar clock is limited. Thus, after the limit number is reached, it is difficult to alter the date and time given by the calendar clock to illegally play back contents data from a recording medium.
(3) In the apparatus, when content data with a playback-permission term or a playback-permission time limit are recorded, the date and time given by the calendar clock are forced into agreement with the date and time of the feed of the content data. Accordingly, the date and time given by the calendar clock can be more correct.
(4) In the apparatus, when content data with a playback-permission term or a playback-permission time limit are accessed for a playback purpose, the date and time given by the calendar clock are forced into agreement with the date and time of the feed of the content data. Accordingly, the date and time given by the calendar clock can be more correct.

## Claims

1. A data recording apparatus comprising:
first means for changing a present date represented by first information; and
second means for limiting a number of times the first means changes the present date represented by the first information.

2. A data recording apparatus as recited in claim 1, further comprising:
third means for receiving data;
fourth means for deciding whether or not the present date represented by the first information precedes a date of feed of the data which is equal to a date of the reception of the data by the third means; and
fifth means for, when the fourth means decides that the present date precedes the date of feed of the data, correcting the present date represented by the first information into agreement with the date of feed of the data.

3. A data recording apparatus as recited in claim 2, further comprising sixth means for recording the data, second information, and third information on a recording medium, the second information representing the date of feed of the data, the third information representing a time limit for permission of playback of the data.

4. A recording medium on which data, second information, and third information are recorded by the data recording apparatus of claim 3.

5. A data reproducing apparatus comprising:
first means for changing a present date represented by first information;
second means for limiting a number of times the first means changes the present date represented by the first information;
third means for reading out data, second information, and third information from a recording medium, the second information representing a date of feed of the data, the third information representing a time limit for permission of playback of the data;
fourth means for deciding whether or not the present date represented by the first information is between the time limit which is represented by the third information and the date of feed of the data which is represented by the second information;
fifth means for, when the fourth means decides that the present date is between the time limit and the date of feed of the data, permitting playback of the data; and
sixth means for, when the fourth means decides that the present date is not between the time limit and the date of feed of the data, inhibiting playback of the data.

6. A data reproducing apparatus as recited in claim 5, further comprising:
seventh means for deciding whether or not the present date represented by the first information precedes the date of feed of the data which is represented by the second information; and
eighth means for, when the seventh means decides that the present date precedes the date of feed of the data, correcting the present date represented by the first information into agreement with the date of feed of the data which is represented by the second information.
